# EUROPEAN PATENT APPLICATION

(11) **EP 1 863 276 A2**
(43) Date of publication of application: **05.12.2007**
(21) Application number: 07106565.0
(22) Date of filing: 20.04.2007
(51) Int. Cl.: H04N 5/44

(54) **Display apparatus and display method**

(30) Priority: 20.04.2006 JP 2006117272
(71) Applicant: MATSUSHITA ELECTRIC INDUSTRIAL CO., LTD, Kadoma-shi, Osaka 571-8501 (JP)
(72) Inventor: Konno, Shunsuke c/o Matsushita Electric Industrial Co., Ltd., Osaka 540-6319 (JP); Kuwabara, Takashi c/o Matsushita Electric Industrial Co., Ltd., Osaka 540-6319 (JP); Fukuda, Hisaya c/o Matsushita Electric Industrial Co., Ltd., Osaka 540-6319 (JP); Umei, Toshitomo c/o Matsushita Electric Industrial Co., Ltd., Osaka 540-6319 (JP); Katta, Noboru, Matsushita Electric Industrial Co., Ltd., Osaka Osaka 540-6319 (JP); Nakagawa, Seiichi c/o Matsushita Electric Industrial Co., Ltd., Osaka 540-6319 (JP)
(74) Representative: Grünecker, Kinkeldey, Stockmair & Schwanhäusser Anwaltssozietät

(57) **Abstract**

A display apparatus including: a display setting section (101) that sets, based on a relative position of a viewer with respect to a screen for displaying an image, at least one display position of the image in the screen; an expansion section(107, 108) that expands an inputted image at an expansion rate in accordance with a direction from which the viewer views the image to be displayed on the display position set by the display setting section; and a display section(111) that displays the image expanded by the expansion section.

## Description

### BACKGROUND OF THE INVENTION

### Field of the Invention

The present invention relates to a display apparatus and display method, and, more particularly, to a display apparatus and display method for at least one fellow passenger in a vehicle to view image inside the vehicle.

### Description of the Related Art

Conventionally, for the fellow passenger in the backseat of a vehicle, a display apparatus is installed between the driver's seat and the front passenger's seat and image typified by video is displayed on the installed display apparatus. This allows the fellow passenger seated in the backseat (hereinafter referred to as "viewer") to enjoy the image displayed on the display apparatus while the vehicle is moving (see, for example Japanese Patent Application Laid-Open No.2002-293195).

Nevertheless, in a conventional apparatus, the view position is restricted by the backseat, resulting in cases where the viewer views the displayed image from an oblique direction with respect to the display apparatus. In this case, the viewer looks at the displayed image compressed mainly in the horizontal direction of the display apparatus. Thus, the viewer cannot view image at aspect ratios viewable from the front of the display apparatus, and the problem arises that making the displayed image is difficult to see on the conventional apparatus. This problem is particularly severe in case that a screen of the conventional apparatus is wide in the horizontal direction.

Further, in the vehicle, because the viewer in the backseat is in close proximity to the screen, the displayed image appears compressed in the horizontal direction when the viewer moves just slightly to one side.

### SUMMARY OF THE INVENTION

The present invention provides a display apparatus and display method capable of displaying image that is easy for the viewer to see from an oblique direction, by expanding the image at predetermined expansion rates.

In accordance with one aspect of the present invention, the display apparatus of the present invention achieves the above-described object by providing a display apparatus employing a configuration having: a display setting section that sets, based on a relative position of a viewer with respect to a screen displaying an image, at least one display position of the image in the screen; an expansion section that expands an inputted image at an expansion rate in accordance with a direction from which the viewer views the image to be displayed in the display position set by the display setting section; and a display section that displays the image expanded by the expansion section.

Further, in accordance with one aspect of the present invention, the display method of the present invention achieves the above-described object by providing a display method including: setting, based on a relative position of a viewer with respect to a screen displaying an image, at least one display position of the image in the screen; expanding an inputted image at an expansion rate in accordance with a direction from which the viewer views the image to be displayed in the display position; and displaying the expanded image in the display position.

The present invention expands image at above-prescribed expansion rates, thereby enabling a viewer to view the image at the original aspect ratio when viewing the image from an oblique direction and making the image easy to see.

### BRIEF DESCRIPTION OF THE DRAWINGS

FIG.1 is a block diagram showing the configuration of a vehicle-mounted apparatus according to an embodiment of the present invention;
FIG.2 is a flowchart showing a display method according to an embodiment of the present invention;
FIG. 3 is a drawing showing screen display setting information according to an embodiment of the present invention;
FIG.4 is a drawing showing the displayed state of an image according to an embodiment of the present invention;
FIG.5 is a drawing showing viewer position information according to an embodiment of the present invention;
FIG.6 is a drawing showing an expansion rate table according to an embodiment of the present invention;
FIG.7 is a drawing showing the displayed state of image according to an embodiment of the present invention;
FIG. 8 is a drawing showing the relationship between the image display and viewer according to an embodiment of the present invention;
FIG. 9 is a drawing showing the relationship between the image display and viewer according to an embodiment of the present invention;
FIG.10 is a drawing showing horizontal start position information according to an embodiment of the present invention;
FIG. 11 is a drawing showing the relationship between the image display and viewer according to an embodiment of the present invention;
FIG. 12 is a drawing showing the relationship between the image display and viewer according to an embodiment of the present invention;
FIG.13 is a drawing showing a method for expanding image according to an embodiment of the present invention;
FIG.14 is a drawing showing a method for expanding image according to an embodiment of the present invention;
FIG.15 is a drawing showing a state of image expansion and compression according to an embodiment of the present invention; and
FIG.16 is a drawing showing the displayed state of image according to an embodiment of the present invention;

### DETAILED DESCRIPTION OF THE PREFERRED EMBODIMENT

Now, embodiments of the present invention will be described in detail with reference to the accompanying drawings.

### (Embodiments)

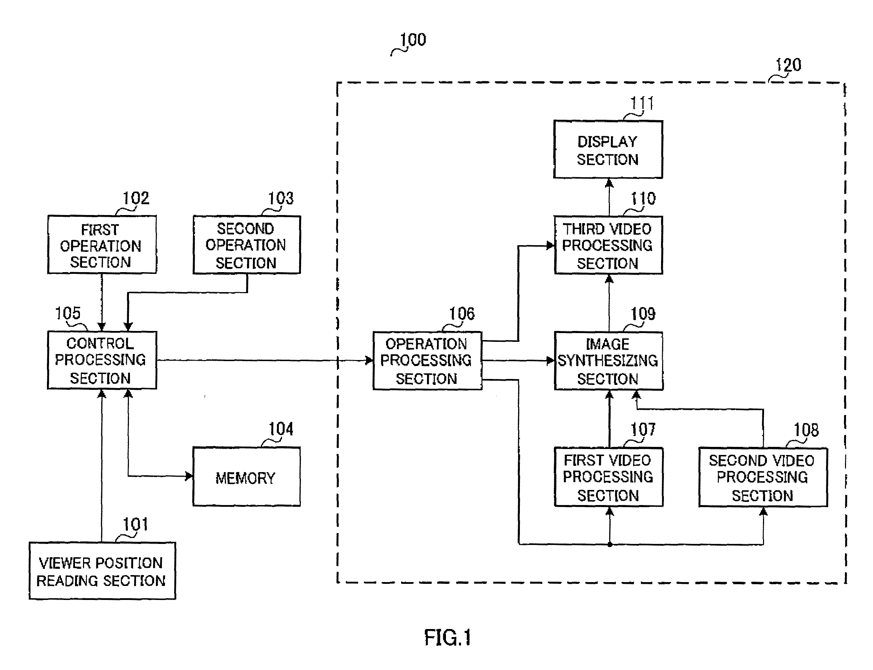

FIG.1 is a block diagram showing the configuration of a vehicle-mounted apparatus 100 according to an embodiment of the present invention. In FIG.1, a display apparatus 120 is formed with an operation processing section 106, a first video processing section 107, a second video processing section 108, an image synthesizing section 109, a third video processing section 110, anda display section 111 that is fixedly installed in a predetermined position inside a vehicle.

A viewer position reading section 101, using weight sensors installed in each backseat, for example, reads the position where a viewer is seated, relative to display section 111. Further, the viewer position reading section 101 presets the angle in the vertical direction (hereinafter "vertical view angle") and the angle in the horizontal direction (hereinafter "horizontal view angle") formed by the line connecting the horizontal center in the horizontal direction of a screen of the display section 111 and right backseat and the line perpendicular to the screen and passing through the center in the horizontal direction of the screen. Further, a viewer position reading section 101 presets the angle in the vertical direction (hereinafter referred to as "vertical view angle") and the angle in the horizontal direction (hereinafter referred to as "horizontal view angle") formed by the line connecting the center in the horizontal direction of the display screen and left backseat and the line perpendicular to the screen and passing through the center in the horizontal direction of the screen. Further, the viewer position reading section 101 presets the angle in the vertical direction (hereinafter referred to as "vertical view angle") and the angle in the horizontal direction (hereinafter referred to as "horizontal view angle") formed by the line connecting the center in the horizontal direction of the screen and center backseat and the line perpendicular to the display screen and passing through the center in the horizontal direction of the screen. In this manner, the viewer position reading section 101 reads the position where the viewer is seated as the direction (viewing direction) from which the viewer views the screen. Then, the viewer position reading section 101 outputs the read result as display control information to a control processing section 105.

A first operation section 102 is installed near the right backseat of the vehicle, has a switch for reporting the seated position (right backseat) of the viewer who is one fellow passenger in the vehicle, and outputs information to the control processing section 105 indicating the seated position (right backseat) of the viewer as display control information when the switch is operated by the viewer. Here, the information indicating the seated position (right backseat) of the viewer refers to information indicating the relative position of the viewer with respect to the screen of the display section 111 and the direction from which the viewer views the screen. Further, the first operation section 102 has an operation section for the viewer to finely adjust the horizontal view angle and vertical view angle, and outputs signals for horizontal view angle and vertical view angle adjustment to the control processing section 105 when the viewer operates the operation section. Further, the first operation section 102 has an adjustment section for the viewer to adjust the contrast and other elements on the overall screen, and outputs signals for adjusting the contrast and other elements to control processing section 105 when the viewer operates the adjustment section.

A second operation section 103 is installed near the left backseat of the vehicle, has switches for reporting a seatedposition (left backseat) of a viewer who is the other fellow passenger in the vehicle, and outputs information indicating the seated position (left backseat) of the viewer as display control information to control processing section 105 when the switch is operated by the viewer. Here, the information indicating the seated position (left backseat) of the viewer is information indicating the relative position of the viewer with respect to the screen and the direction from which the viewer views the screen. Further, the second operation section 103 has an operation section for the viewer to finely adjust the horizontal view angle and vertical view angle, and outputs signals for the horizontal view angle and vertical view angle adjustment to the control processing section 105 when the viewer operates the operation section. Further, the second operation section 103 has an adjustment section for the viewer to adjust the contrast and other elements on the overall screen, and outputs signals for adjusting the contrast and other elements to the control processing section 105 when the viewer operates the adjustment section. Furthermore, the second operation section 103 is typically operated by a viewer other than the viewer who operates a first operation section 102.

A memory 104 stores information for selecting the display position and expansion rates of image displayed on the screen.

The control processing section 105 determines the expansion rates and display position of image displayed on the screen based on the display control information inputted from the viewer position reading section 101 and the information for selecting the image display position and image expansion rates stored in the memory 104. Further, the control processing section 105 determines the expansion rates and displayposition of image displayed on the screen based on the display control information inputted from the first operation section 102 and the second operation section 103 and the information for selecting the image display position and image expansion rates stored in the memory 104. Then, the control processing section 105 creates a command for expanding the image at determined expansion rates and a command for displaying the image on the determined display position, and outputs the created commands to an operation processing section 106. Further, the control processing section 105 creates a command for adjusting the expansion rates based on the horizontal view angle and vertical view angle adjustment signals inputted from the first operation section 102 and the second operation section 103, and outputs the created command to the operation processing section 106. Further, the control processing section 105 creates a command for adjusting the contrast and other elements based on the signals for contrast and other adjustment inputted from the first operation section 102 and the second operation section 103, and outputs the created command to the operation processing section 106. The details of the method for determining the expansion rates and display position will be described later.

The operation processing section 106 determines the destinations of the commands inputted from the control processing section 105 and, based on the determination results, outputs the commands to the first video processing section 107, the second video processing section 108, the image synthesizing section 109 and the third video processing section 110. Specifically, the operation processing section 106 outputs the command for expanding the image at determined expansion rates to the first video processing section 107 and the second video processing section 108. Further, the operation processing section 106 outputs the command for displaying the image on a determined display position to image the synthesizing section 109. Further, the operation processing section 106 outputs the command for adjusting the expansion rates to the first video processing section 107 and the second video processing section 108. Further, the operation processing section 106 outputs the command for contrast and other adjustment to the third video processing section 110.

The first video processing section 107, which exemplifies an expansion means, processes the image in accordance with the command for expanding the image inputted from the operation processing section 106. Specifically, the first video processing section 107 expands the image in the horizontal and vertical directions using the expansion rates selected by the control processing section 105. Further, the first video processing section 107 adjusts the expansion rates of the image in accordance with the viewer operation of the first operation section 102 and the second operation section 103. Then, the first video processing section 107 outputs the expanded image to the image synthesizing section 109.

The second video processing section 108, which exemplifies an expansion means, processes the image in accordance with the command for expanding the image inputted from the operation processing section 106. Specifically, the second video processing section 108 expands the image in the horizontal and vertical directions using the expansion rates selected by the control processing section 105. Further, the second video processing section 108 adjusts the expansion rates of the image in accordance with the viewer's operation of the first operation section 102 and the second operation section 103. Then, the second video processing section 108 outputs the expanded image to the image synthesizing section 109. The specific method for expanding the image will be described later.

The image synthesizing section 109, which exemplifies a display setting means, processes the image in accordance with the command for displaying the image on the determined display position inputted from the operation processing section 106. Specifically, the image synthesizing section 109, in accordance with the command inputted from the operation processing section 106, synthesizes the image inputted from the first video processing section 107 and the image inputted from the second video processing section 108, so that the images are displayed together in the determined display positions of the display section 111. Further, when an image is inputted from one of the first video processing section 107 and the second video processing section 108, the image synthesizing section 109 performs processing in accordance with the command inputted from the operation processing section 106 and either displays the inputted image in the left part, center, or right part of the screen or displays the inputted image over the entire screen. Then, the image synthesizing section 109 outputs the processed image to the third video processing section 110.

The third video processing section 110 adjusts the contrast and other elements of the overall image in accordance with the command for adjusting the contrast and other elements of the image inputted from the operation processing section 106. Then, the third video processing section 110 outputs the image with the contrast and other elements adjusted, to the display section 111.

The display section 111 displays, on the screen thereof, the image inputted from the third video processing section 110. Specifically, when an image in which a plurality of different images are synthesized are inputted from the third video processing section 110, the display section 111 displays the synthesized image. When a single image is inputted from the third video processing section 110, the display section 111 displays the single image in the left part, center, or right part of the screen or over the entire screen.

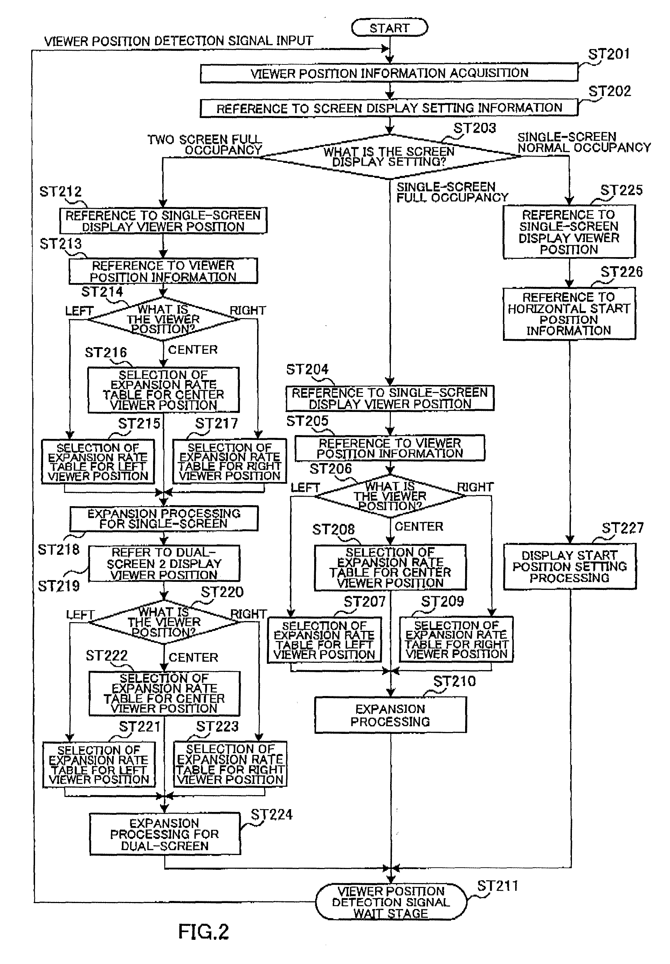

Next, the image display method will be described with reference to FIG.2. FIG.2 is a flowchart showing an image display method.

First, the viewer position reading section 101 reads the position from which the viewer views the image displayed on the screen of the display section 111 . For example, the viewer position reading section 101, using weight sensors installed in each seat, recognizes that a viewer is seated on a seat and reads the relative position of the seat, on which the viewer is seated, with respect to the display section 111. Then, the viewer position reading section 101 regards the read position as viewer position information (step ST201).

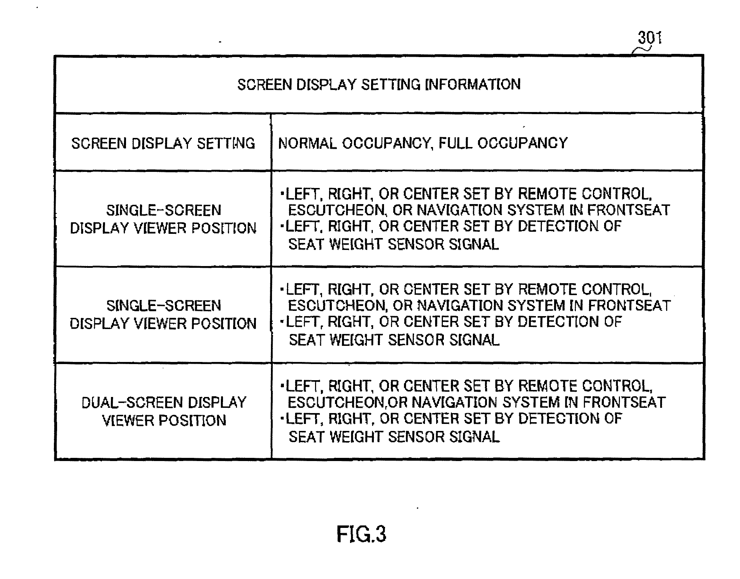

Next, the control processing section 105 refers to screen display setting information stored in the memory 104 (step ST202). FIG.3 shows an example of the screen display setting information 301.

Next, referring to the screen display setting information 301, the control processing section 105 judges whether the screen display setting is normal occupancy or full occupancy. Further, the control processing section 105 judges whether there is one viewer or there are two viewers based on the viewer position information obtained in the viewer position reading section 101 (step ST203).

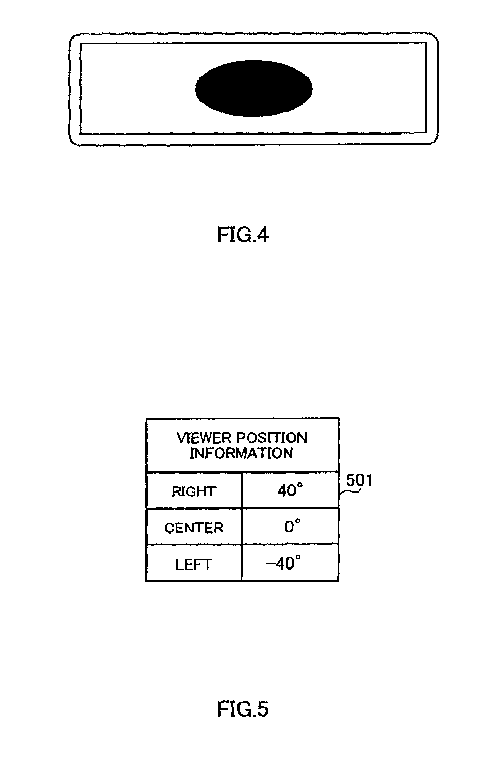

In step ST203, when the control processing section 105 judges that there is one viewer and selects single-screen full occupancy, the image expanded to the full screen is displayed on the screen as shown in FIG.4. In this case, the control processing section 105 refers to the single-screen display viewer position of the screen display setting information 301 (step ST204). In the single-screen display viewer position, the viewer position is judged based on either a mode where the viewer right, left, or center view position is set by a remote control, escutcheon, or a navigation system set around the frontseat, or a mode where the viewer right, left, or center view position is set by the detection result of a weight sensor installed in a seat. That is, in the mode where the viewer position is set by a remote control, escutcheon, or navigation system set around the frontseat, the control processing section 105 selects the display position and expansion rates based on the view position inputted by the first operation section 102 or the second operation section 103 when the viewer operates switches. In the mode where the viewer position is set by the detection of the signal of a weight sensor installed in a seat, the control processing section 105 selects the display position and expansion rates based on the view position read by the viewer position reading section 101.

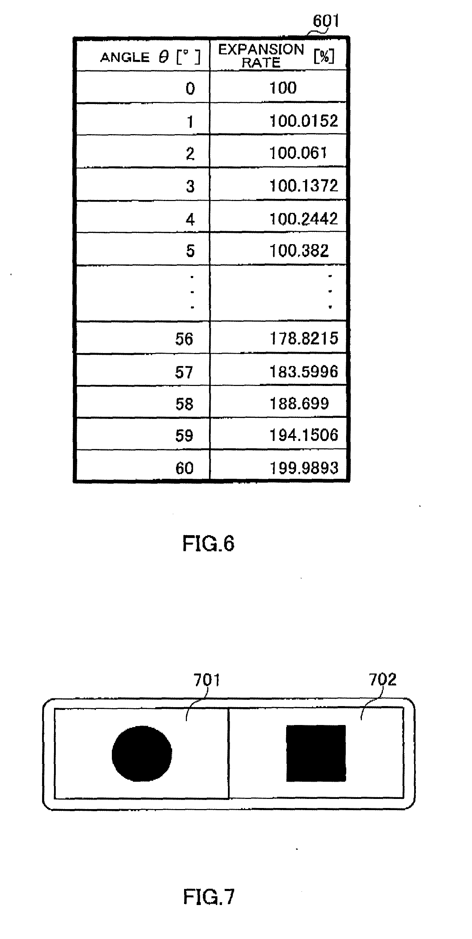

Next, the control processing section 105 refers to the viewer position information 501 of FIG.5 stored in the memory 104 (step ST205). Referring to the viewer position information 501, the control processing section 105 selects a view angle of 40 degrees when the viewer is seated in the right seat with respect to the forward direction of the vehicle. When the viewer is seated on the center seat, the control processing section 105 selects a view angle of 0 degrees. When the viewer is seated on the left seat with respect to the forward direction, the control processing section 105 selects a view angle of -40 degrees.

Next, the control processing section 105 judges the position of the viewer based on the settings of the first operation section 102 and the second operation section 103, and the result of reading by the viewer position reading section 101 (step ST206).

Upon being judged that a viewer is seated on the left seat, the control processing section 105 selects the viewer position information 501 stored in the memory 104, selects a view angle of -40 degrees and, using the angle information for the selected view angle of -40 degrees, selects the expansion table for the left seat stored in the memory 104 to select the expansion rates (step ST207).

Upon being judged that a viewer is seated on the center seat, the control processing section 105 selects the viewer position information 501 stored in the memory 104, selects a view angle of 0 degrees and, using the angle information for the selected view angle of 0 degrees, selects the expansion table for the center seat stored in memory 104 to select the expansion rates (step ST208) .

Upon being judged that a viewer is seated in the right seat, the control processing section 105 selects the viewer position information 501 stored in the memory 104, selects a view angle of 40 degrees and, using the angle information for the selected view angle of 40 degrees, selects the expansion table for the right seat stored in the memory 104 to select the expansion rates (step ST209) . FIG.6 shows an example of an expansion rate table 601. As shown in FIG.6, the expansion rate table 601 includes information that associates the angles at which the viewer views the screen with expansion rates. For example, when the control processing section 105 selects a view angle of 40 degrees from the viewer position information 501, the control processing section 105 selects the expansion rates associated with the angle of 40 degrees from the expansion rate table 601.

Next, the first video processing section 107 or the second video processing section 108 expands the image at the expansion rates selected by the control processing section 105 (step ST210) .

Next, the display section 111 displays the expanded image on the full screen. Subsequently, vehicle-mounted apparatus 100 enters a viewer position detection signal wait state (step ST211) . Then, when a viewer position detection signal is inputted, vehicle-mounted apparatus 100 starts the processing of the step ST201 to the step ST227.

In step ST203, when the control processing section 105 judges that there are two viewers and selects dual-screen full occupancy, two different images are simultaneously displayed on the screen as shown in FIG.7 In this case, the control processing section 105 refers to the single-screen display viewer position of the screen display setting information 301 (step ST212). In the single-screen display viewer position, the viewer position is judged using either a mode where the viewer right, left, or center view position is set by a remote control, escutcheon, or a navigation system set around the frontseat, or a mode where the viewer right, left, or center view position is set by the detection of a signal of a weight sensor installed in the seat. The processing of each mode is the same as that of the single-screen display viewer position, and a description thereof is omitted.

Next, the control processing section 105 refers to the viewer position information 501 of FIG.5 stored in the memory 104 (step ST213).

Next, the control processing section 105 judges the position of the viewer based on the settings of the first operation section 102 and the second operation section 103, and the result of reading by the viewer position reading section 101 (step ST214).

Upon being judged that a viewer is seated on the left seat, the control processing section 105 selects the viewer position information 501 stored in the memory 104, selects a view angle of -40 degrees and, using the angle information for the selected view angle of -40 degrees, selects the expansion table for the left seat stored in the memory 104 to select the expansion rates (step ST215) .

Upon being judged that a viewer seated on the center seat, the control processing section 105 selects the viewer position information 501 stored in the memory 104, selects a view angle of 0 degrees and, using the angle information for the selected view angle of 0 degrees, selects the expansion table for the center seat stored in the memory 104 to select the expansion rates (step ST216) .

Upon being judged that a viewer is seated on the right seat, the control processing section 105 selects the viewer position information 501 stored in the memory 104, selects a view angle of 40 degrees and, using the angle information for the selected view angle of 40 degrees, selects the expansion table for the right seat stored in the memory 104 to select the expansion rates (step ST217) .

Next, the first video processing section 107 or the second video processing section 108 expands the image displayed on a display screen 701 at the expansion rates selected by the control processing section 105 (step ST218).

Next, the control processing section 105 refers to the dual-screen display viewer position of the screen display setting information 301 (step ST219). In the dual-screen display viewer position, the viewer position is determined using either a mode where the viewer right, left, or center view position is set by a remote control, escutcheon, or a navigation system set around the frontseat, or a mode where the viewer right, left, or center view position is set by the detection of a signal of a weight sensor installed in a seat. The processing of each mode is the same as that of the above-described single-screen display viewer position, and a description thereof is omitted.

Next, the control processing section 105 refers to the viewer position information 501 of FIG.5 stored in the memory 104.

Next, the control processing section 105 judges the position of the viewer based on the settings of the first operation section 102 and the second operation section 103, and the result of reading by viewer position reading section 101 (step ST220).

Upon being judged that a viewer is seated on the left seat with respect to the forward direction of the vehicle, the control processing section 105 selects the viewer position information 501 stored in the memory 104, selects a view angle of -40 degrees and, using the angle information for the selected view angle of -40 degrees, selects the expansion table for the left seat stored in the memory 104 to select the expansion rates (step ST221).

Upon being judged that a viewer is seated in the center seat with respect to the forwarddirection, the control processing section 105 selects the viewer position information 501 stored in the memory 104, selects a view angle of 0 degrees and, using the angle information for the selected view angle of 0 degrees, selects the expansion table for the center seat stored in the memory 104 to select the expansion rates (step ST222).

Upon being judged that a viewer is seated in the right seat, the control processing section 105 selects the viewer position information 501 stored in the memory 104, selects a view angle of 40 degrees and, using the angle information for the selected view angle of 40 degrees, selects the expansion table for the right seat stored in the memory 104 to select the expansion rates (step ST223) .

Next, the first video processing section 107 or the second video processing section 108 expands the image displayed on the screen 702 at the expansion rates selected by the control processing section 105 (step ST224).

Subsequently, the vehicle-mounted apparatus 100 enters a viewer position detection signal wait state (step ST211).

Further, in the step ST203, when the control processing section 105 judges that there is one viewer and selects single-screen normal occupancy, one image is displayed on the screen of the display section 111. In this case, the control processing section 105 refers to the single-screen display viewer position of the screen display setting information 301 (step ST225) . In the single-screen display viewer position, the viewer position is determined using a mode where the viewer right, left, or center view position is set by a remote control, escutcheon, or a navigation system set around the frontseat, or a mode where the viewer right, left, or center view position is set by the detection result of a weight sensor installed in a seat.

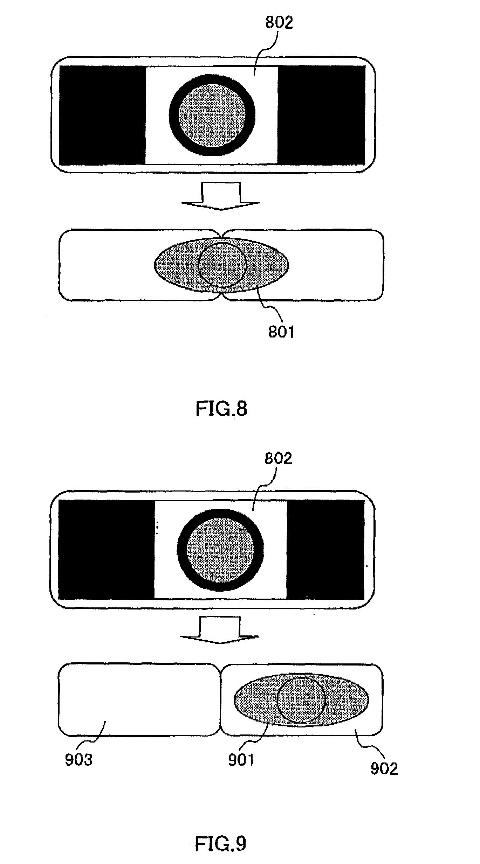

In the case of single-screen normal occupancy, typically, one image is displayed at normal aspect ratios in the center of the screen of the display section 111, as shown in FIG.8. However, while a viewer 801 can view the image at normal aspect ratios when the viewer 801 faces an image 802, a viewer 901 views the image 802 from an oblique direction when seated on a right seat 902, causing the image 802 to look compressed to the viewer 901. Further, the conditions under which the image 802 looks compressed are the same when the viewer 901 is seated on a left seat 903.

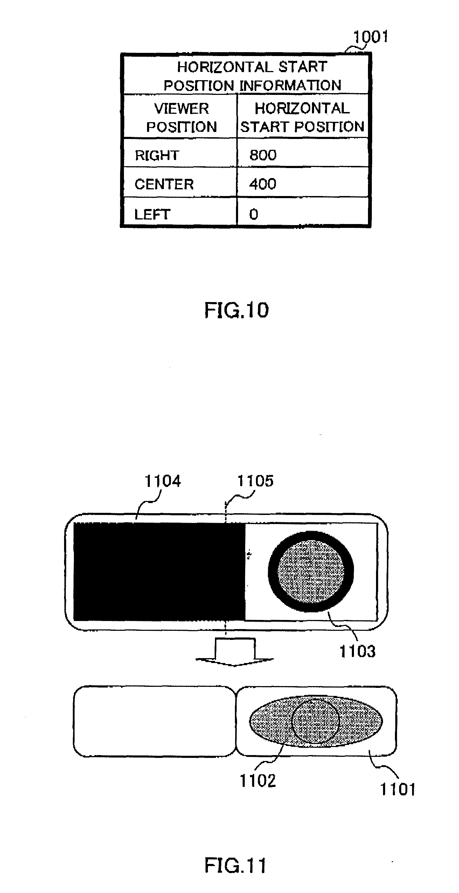

Next, the control processing section 105 selects the horizontal start position by referring to horizontal start position information 1001 shown in FIG.10 using the settings of the first operation section 102 or the second operation section 103 and the result of reading by the viewer position reading section 101 (step ST226). The horizontal start position information 1001 is information that associates the viewer position and pixels of the screen as the horizontal startposition. Furthermore, because image is drawn from left to right on the screen with analog video signals, the left edge of the screen is set as the zeroth pixel even with digital video data. For example, as shown in FIG.11, when a viewer 1102 is seated in right seat 1101 with respect to the forwarddirection of the vehicle(upward in FIG.11), that is, when the viewer 1102 views a screen 1104 from a rightward position with respect to the center 1105 along the horizontal direction of the screen 1104, the control processing section 105 selects a horizontal start position 800 so that an image 1103 is drawn in the right part of the screen 1104. Then, the image synthesizing section 109 sets the display position so that the image 1103 is drawn in the right part of the screen 1104. In this manner, the viewer 1102 seated in the right seat 1101 is able to view the image 1103 displayed on the screen 1104 as if he or she viewed the image from the front of the screen 1104.

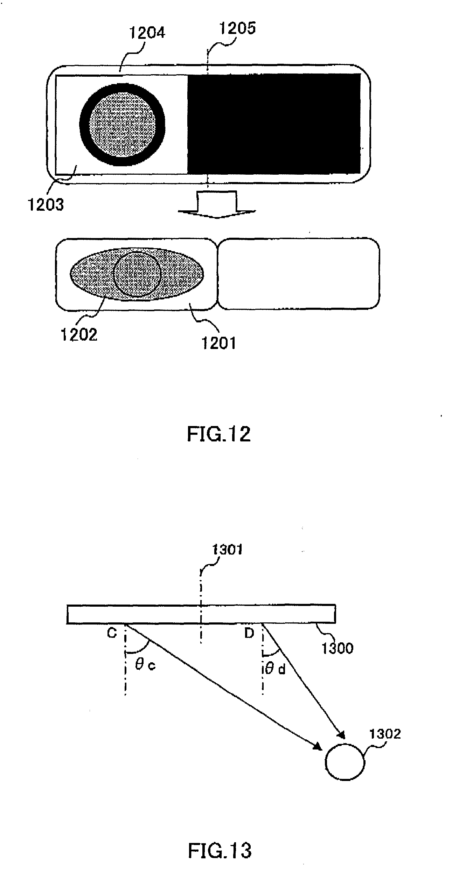

Further, as shown in FIG.12, when a viewer 1202 is seated in a left seat 1201 with respect to the forward direction of the vehicle(upward in FIG.12), that is, when the viewer 1202 views a screen 1204 of the display section 111 from a leftward position with respect to the center 1205 in the horizontal direction of the screen 1204, the control processing section 105 selects the horizontal start position 0 so that an image 1203 is drawn in the left part of the screen 1204. Then, the image synthesizing section 109 sets the display position so that the image 1203 is drawn in the left part of the screen 1204. In this manner, the viewer 1202 seated in the left seat 1201 is able to view the image 1203 displayed on the screen 1204 as if he or she viewed the image from the front of the screen 1204.

Next, the control processing section 105 performs the processing for setting the selected horizontal start position (step ST227), and the display section 111 displays the image in the set horizontal start position of the screen.

Subsequently, the vehicle-mounted apparatus 100 changes to a viewer position detection signal wait state (step ST211).

Next, the method for expanding the image in the first video processing section 107 and second video processing section 108 will be explained.

FIG.13 is a drawing for explaining the method for expanding the image. In FIG.13, on a screen 1300 of the display section 111, the screen is split into two partial areas C and D. In FIG.13, the partial area C is illustrated in the left side of a boundary line 1301, and the partial area D is illustrated in the right side of the boundary line 1301. Then, the control processing section 105 separately finds angle θc at which a viewer 1302 views the image to be displayed in the area C, and angle θd at which the viewer 1302 views the image to be displayed in the area D. Then, the first video processing section 107 and the second video processing section 108 separately expand the image to be displayed in the area C and the image to be displayed in the area D at expansion rates according to angles θc and θd found by the control processing section 105.

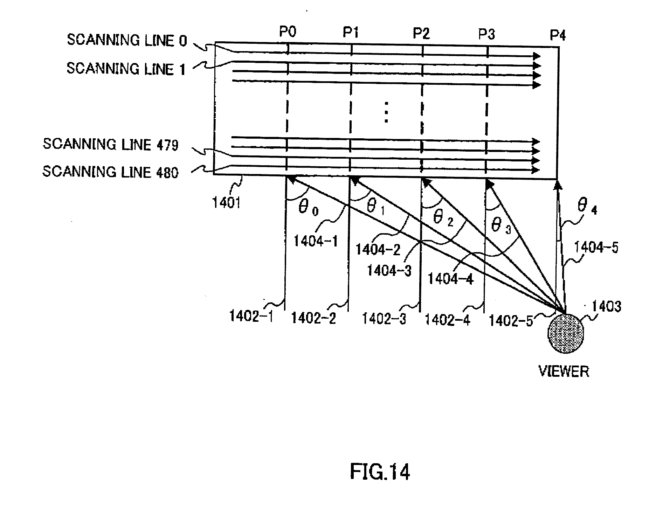

FIG. 14 is a drawing for explaining another method of expanding image that is different from FIG.13. FIG.14 is a drawing showing an example of the view angle θi per inflection point (i = 0 to 4). Here, each view angle θi, as shown in FIG.14, is the angle formed by lines 1404-1 to 1404-5 connecting a viewer 1403 and a horizontal position Pi and lines 1402-1 to 1402-5 perpendicular to a screen 1401 each of the horizontal positions Pi along the horizontal direction (left and right directions in FIG.14) of the screen 1401 of each inflection point i. In the case of FIG.14, the number of inflection points n is 5, and the horizontal positions Pi of the inflection points i are the respective positions P0 to P4 shown in FIG.14. As shown is FIG.14, the view angle θi is θ0 for the position P0, θ1 for the position P1, θ2 for the position P2, θ3 for the position P3, and θ4 for the position P4, hence the relationship θ1 > θ2 > θ3 > θ4. By this means, the expansion rates of the image to be displayed on the screen 1401 increase in proportion to the distance from the viewer 1403 of the screen 1401 (i.e., from the right to the left on the screen 1401). Furthermore, the screen 1401 has 481 scanning lines of horizontal scanning lines 0 to 480.

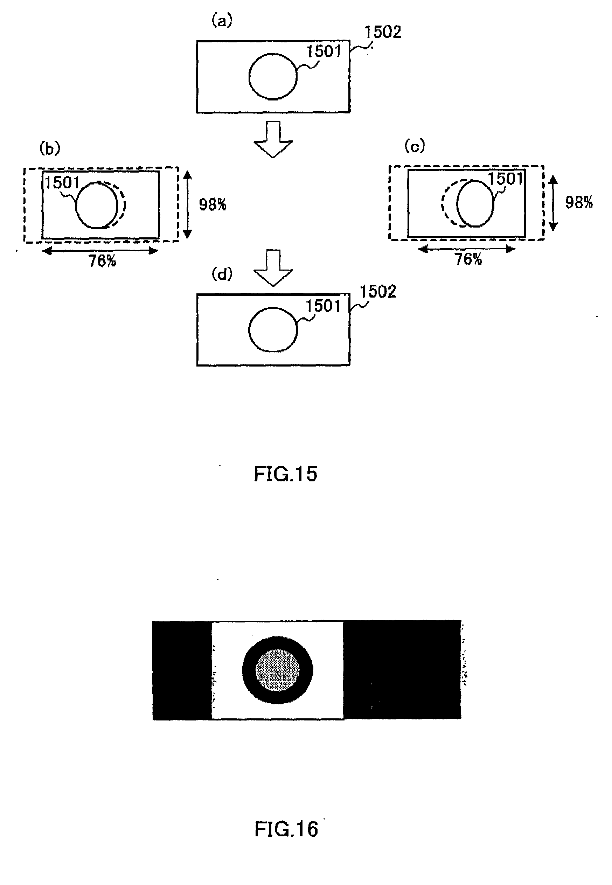

FIG.15 is a diagram comparing a conventional case where image is not expanded, to the case of the present embodiment where image is expanded. When a viewer views a screen 1502 from the front thereof, as shown in FIG.15(A), the image 1501 does not look compressed. On the other hand, when the viewer is seated in a position 10 degrees to the left from the straight-on position with respect to the screen 1502, as shown in FIG.15(B), the image 1501 looks compressed at 76% leftward in the horizontal direction to the viewer. Further, when a viewer is seated in a position 10 degrees to the right from the straight-on position with respect to the screen 1502, as shown in FIG.15(C), the image 1501 looks compressed at 76 % rightward in the horizontal direction to the viewer. Further, when a viewer is seated in a position 40 degrees downward from the straight-on position with respect to the screen 1502, as shown in FIG.15(B) and (C), the image 1501 looks, on the display, compressed at 98 % upward in the vertical direction to the viewer.

In this case, the first video processing section 107 and the second video processing section 108 expand image 1501 at the expansion rates found by: expansion rate = 1 / (100 × cosθ). That is, the first video processing section 107 and the second video processing section 108 control the expansion rates so that the image is displayed expanded at 131 % in the horizontal direction and 102 % in the vertical direction, based on the expansion rates found by the above-mentioned equation. Thus, as shown in FIG.15(D) the viewer is able to view the image in the same state as the image 1501 of FIG. 15 (A) where the viewer views the image straight-on with respect to the screen.

In this manner, according to the present embodiment, image displayed in a predetermined display position or image displayed using a predetermined display method is expanded at expansion rates according to the view direction of the viewer, thereby enabling the viewer to view the image at the original aspect ratio when viewing the image from an oblique direction and making the image easy to see. Further, according to the present embodiment, the display position of the image is changed so that the viewer can view the image at normal aspect ratios, thereby enabling the viewer to view the optimal image without having to move.

Furthermore, while in the present embodiment the image is displayed in the right, center, or left part of the screen of the display section 111 when one image is displayed, the present invention is not limited thereto, and, as shown in FIG.16, the image may be displayed in any arbitrary position that enables the viewer to view the image at normal aspect ratios. This processing is performed by the image synthesizing section 109 in accordance with commands generated by the control processing section 105. Further, while in FIG. 1 the display apparatus 120 is formed with the operation processing section 106, first video processing section 107, second video processing section 108, image synthesizing section 109, third video processing section 110 and display section 111, the present invention is not limited thereto, and the display apparatus may include the control processing section 105 as well. As described above, the present invention expands image at predetermined expansion rates, thereby enabling a viewer to view the image at the original aspect ratio when viewing the image from an oblique direction and making the image easy to see.

## Claims

1. A display apparatus comprising:
a display setting section that sets, based on a relative position of a viewer with respect to a screen displaying an image, at least one display position of the image in the screen;
an expansion section (107, 108) that expands an inputted image at an expansion rate in accordance with a direction from which the viewer views the image to be displayed in the display position set by the display setting section; and
a display section (111) that displays the image expanded by the expansion section.

2. The display apparatus according to claim 1, wherein the display setting section sets, if the viewer views the screen from a right side with respect to the center of the screen along a horizontal direction of the screen, the display position such that the image is displayed in a right area on the screen, and sets, if the viewer views the screen from a left side with respect to the center of the display screen along the horizontal direction of the screen, the display position such that the image is displayed in a left area on the screen.

3. The display apparatus according to claim 1, wherein the expansion section (107, 108) expands the image in a horizontal direction at a larger expansion rate in accordance with an increase in an angle in the horizontal direction of the viewer viewing the image to be displayed on the display position.

4. The display apparatus according to claim 1, wherein:
the display setting section respectively sets, based on relative positions of viewers with respect to the screen, a plurality of display positions of images to be displayed;
the expansion section (107, 108) respectively expands inputted images to be displayed on the display positions set by the display setting section; and
the display section (111) displays the images expanded by the expansion section.

5. A display method comprising:
setting, based on a relative position of a viewer with respect to a screen displaying an image, at least one display position of the image in the screen;
expanding an inputted image at an expansion rate in accordance with a direction from which the viewer views the image to be displayed in the display position; and
displaying the expanded image in the display position.
